# FASCICULE DE BREVET EUROPEEN

(11) **EP 0 464 767 B1**
(45) Date de publication et mention de la délivrance du brevet: **19.04.1995**
(21) Numéro de dépôt: 91110941.1
(22) Date de dépôt: 02.07.1991
(51) Int. Cl.: H01R 35/02

(54) **Dispositif formé de deux éléments articulés autour d'une charnière et reliés par une liaison électrique**
Aus zwei über ein Gelenk und elektrisch verbundenen Elementen bestehendes Gerät
Device composed of two elements jointed on a hinge and electrically connected

(30) Priorité: 04.07.1990 FR 9008490
(43) Date de publication de la demande: 08.01.1992
(73) Titulaire: ALCATEL MOBILE COMMUNICATION FRANCE, 75008 Paris (FR)
(72) Inventeur: Ozouf, René, F-93350 Le Bourget (FR); Seguin, Jean-Michel, F-92600 Asnières sur Seine (FR)
(74) Mandataire: Weinmiller, Jürgen

(56) Documents cités:
- EP-A- 0 038 066
- FR-A- 2 194 224
- FR-A- 2 399 749

## Description

La présente invention concerne un dispositif formé de deux éléments articulés autour d'une charnière et reliés par une liaison électrique.

Les appareils électriques formés de deux éléments articulés autour d'une charnière comprennent couramment une liaison électrique entre ces deux éléments. Cette liaison doit être protégée mécaniquement. Il est ainsi connu de l'incorporer dans la charnière, où elle prend la forme d'un toron de fils ou d'un circuit souple. Le toron de fils limite le nombre de connexions élémentaires pour peu que l'espace disponible dans la charnière soit limité. Le circuit souple, lorsqu'il est disposé perpendiculairement à l'axe de la charnière, est soumis à des contraintes mécaniques importantes lors de la rotation relative d'un élément par rapport à l'autre, ce qui agit directement sur la fiabilité de la liaison électrique.

La demande de brevet FR-A-2194224 décrit un dispositif prévu pour pallier en partie ces imperfections. Cependant la liaison électrique chemine par un passage qui est percé dans la paroi de chacun des deux éléments articulés, il s'ensuit que l'introduction de la liaison électrique dans la charnière est malaisée, voire impossible dans certains cas. D'autre part la charnière présentée étant réalisée classiquement au moyen de charnerons juxtaposés avec un certain jeu, la pluie ou les poussières peuvent s'introduire par le jeu présent entre un charnon d'un élément et le charnon voisin de l'autre élément, ce qui est néfaste pour des appareils utilisés dans les ambiances les plus diverses, notamment à l'extérieur.

La présente invention a ainsi pour objet un dispositif formé de deux éléments articulés autour d'une charnière et reliés par une liaison électrique soumise à des contraintes réduites lors d'une rotation, ce dispositif présentant en outre une bonne étanchéité vis-à-vis de la pluie et des poussières et permettant un montage plus aisé de la liaison électrique dans la charnière.

Elle offre un intérêt particulier dans le cadre de la réalisation de terminaux téléphoniques portatifs pliants.

Dans le dispositif formé de deux éléments articulés autour d'une charnière et reliés par une liaison électrique selon l'invention, cette liaison électrique étant contenue dans la charnière, le premier des éléments comprend deux saillies, dont l'une d'entre elles est pourvue d'une fente, le second des éléments comprend une protubérance prévue pour s'engager entre les saillies et pourvue d'une autre fente, la liaison électrique passant par ces fentes, et de plus, le premier élément est formé de deux demi-coquilles, les faces en regard des saillies sont pourvues d'une cavité cylindrique contenue pour moitié dans chacune des demi-coquilles, les extrémités de la protubérance sont également cylindriques, la protubérance étant prévue pour s'emboîter dans les cavités des sailies afin de former la charnière.

De plus, dans le dispositif, ladite charnière comprend des moyens de guidage dans chacune des saillies , une section de centrage disposée dans un évidement reliant les deux extrémités de la protubérance et un axe coopérant avec ces moyens de guidage et la section de centrage, un espace vide au moins autour de l'axe s'étendant d'une fente de la protubérance à une fente d'une saillie.

Dans une variante de réalisation, le dispositif comprend des moyens pour immobiliser en rotation l'axe dans la protubérance.

Avantageusement, dans le dispositif, ces moyens d'immobilisation comprennent des cannelures disposées sur la section de centrage qui coopèrent avec des rainures de la section correspondante de l'axe.

Dans un mode de réalisation du dispositif cet axe est composé de deux demi-axes encastrés l'un dans l'autre, un ressort étant disposé entre ces deux demi-axes afin de tendre à les éloigner.

De plus, dans le dispositif, une saillie au moins présentant une surface d'appui qui fait face à une surface de frottement de l'axe, ces deux surfaces étant sensiblement perpendiculaires à cet axe, une rondelle est interposée entre la surface d'appui et la surface de frottement afin de freiner la rotation relative de ces deux surfaces.

Avantageusement, dans le dispositif, cette rondelle est en feutre.

Selon une caractéristique additionnelle du dispositif, une saillie au moins étant pourvue d'un orifice sur son extrémité opposée à la cavité cylindrique, il comprend un bouchon prévu pour être introduit dans cet orifice et des moyens de fixation afin d'immobiliser le bouchon dans la saillie.

De plus, dans le dispositif, la liaison électrique est un circuit souple au moins prévu pour être enroulé autour de l'axe.

En outre, le dispositif comprend des moyens de verrouillage afin de permettre l'immobilisation des deux éléments dans une position déterminée au moins.

Le dispositif selon l'invention trouve une application avantageuse dans la réalisation d'un appareil téléphonique portatif pliant.

Les différents objets et caractéristiques de la présente invention apparaîtront de manière plus précise dans le cadre d'un exemple de réalisation donné à titre non limitatif en se référant aux figures annexées qui représentent :
- la figure 1, une vue de côté du dispositif formé de deux éléments articulés autour d'une charnière et reliés par une liaison électrique de l'invention,
- la figure 2, une vue en coupe selon le plan médian de la charnière de ce dispositif,
- la figure 3, une vue de côté du deuxième élément du dispositif de l'invention,
- la figure 4, une vue éclatée de l'axe, des rondelles et des bouchons de ce dispositif,
- la figure 5, une vue de face d'un demi-axe du dispositif,
- la figure 6, une vue de face d'un bouchon du dispositif.

Les éléments présents dans différentes figures porteront une seule référence.

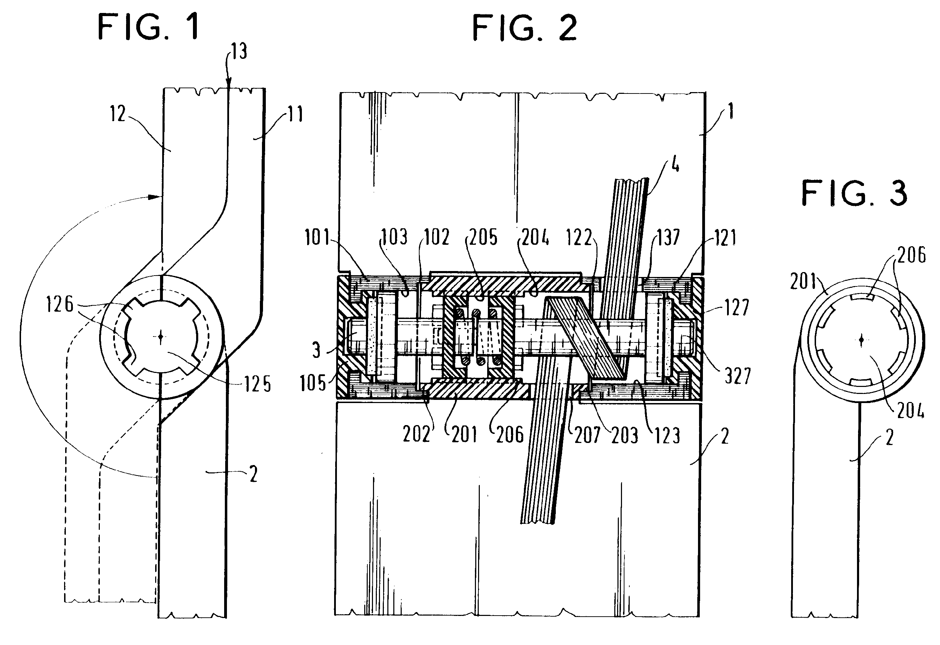

Le dispositif de l'invention représenté de côté dans la figure 1 comprend un premier élément 1 formé d'une première 11 et d'une deuxième 12 demi-coquilles. Il comprend un deuxième élément 2 articulé autour du précédent.

Le premier élément comprend deux saillies de forme sensiblement cylindriques qui partagent le même axe. La surface de séparation 13 des deux demi-coquilles est telle qu'elle partage chaque saillie selon un plan qui contient cet axe. Le deuxième élément, qui dans ce cas est d'un seul tenant, comprend une protubérance de forme sensiblement cylindrique qui est prévu pour être introduit entre les deux saillies et immobilisé selon ce même axe.

Les détails de réalisation apparaissent plus précisément dans la figure 2 où sont représentés la première demi-coquille 11 et le deuxième élément 2 vu en coupe selon un plan médian en position d'assemblage. Cette figure correspond à une vue en coupe du dispositif selon la surface de séparation lorsque celle-ci partage les deux coquilles et la protubérance selon un plan parallèle à leur axe commun.

La première saillie 101 comprend une cavité cylindrique 102 qui fait face à la protubérance 201. La deuxième saillie 121 comprend également une cavité cylindrique 122 qui fait face à la protubérance 201. Cette protubérance 201 a deux extrémités cylindriques 202, 203 dont le diamètre est légèrement inférieur à celui des cavités cylindriques 102, 122 et sa longueur est prévue pour que ses extrémités viennent s'emboîter dans les saillies. Ainsi, lorsque les deux demi-coquilles sont assemblées avec des moyens de fixation non représentés, les deux éléments sont libres en rotation tandis qu'ils sont immobilisés en translation.

La protubérance 201 apparaît également dans la figure 3 qui représente une vue de côté du deuxième élément 2.

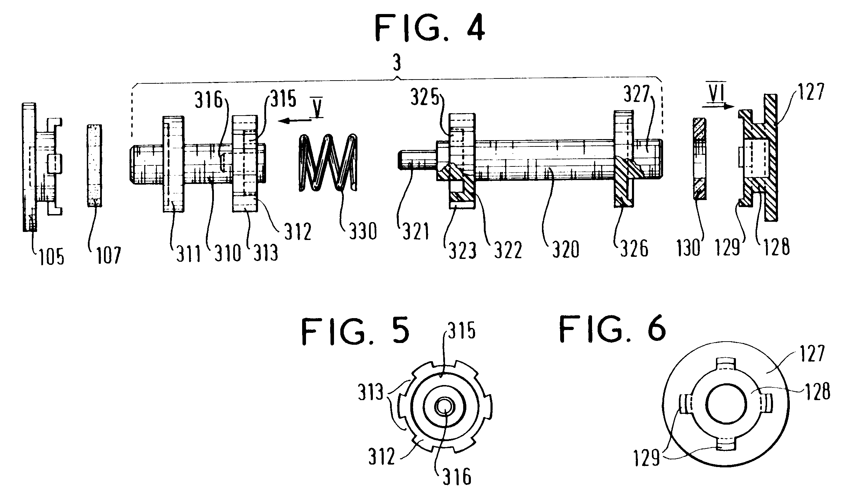

Les moyens décrits ci-dessus définissent donc une charnière. Le dispositif de l'invention, selon une caractéristique optionnelle, comprend de plus un axe 3 qui permet d'améliorer la rigidité et d'obtenir d'autres résultats qui seront précisés par la suite. Cet axe 3 qui apparaît également dans la figure 4 est composé de deux demi-axes qui seront conventionnellement dénommés petit axe 310 et grand axe 320, et un ressort 330 prenant appui sur chaque demi-axe.

Le petit axe 310 représenté de face dans la figure 5 comprend un premier disque 311 qui est prévu pour s'engager dans une ouverture cylindrique 103 de la première saillie 101, cette ouverture constituant des moyens de guidage. Il comprend également un deuxième disque 312 pourvu de cannelures 313.

La protubérance 201 du deuxième élément comprend un évidement cylindrique 204 qui la traverse d'une extrémité à l'autre. Sur une section de cet évidement, section de centrage 205, figurent des éléments de centrage longitudinaux 206 qui sont en relief par rapport à la surface cylindrique de l'évidement.

Les cannelures 313 du deuxième disque 312 coopèrent avec ces éléments de centrage 206 de manière à ce que le petit axe puisse coulisser dans la protubérance mais ne puisse pas tourner dans celle-ci.

Dans une variante de réalisation, la section de centrage est dépourvue d'éléments de centrage, les cannelures 313 n'étant, de fait, plus indispensables. Son diamètre est toutefois prévu pour correspondre à celui du deuxième disque.

Une gorge 315 est disposée dans la face du deuxième disque 312 qui fait face au grand axe. Elle est prévue pour recevoir une extrémité du ressort 330.

Le petit axe 310 comprend également un trou axial 316 cylindrique à son extrémité située du côté du deuxième disque 312.

Le grand axe 320 comprend une première extrémité 321 cylindrique prévue pour s'engager dans le trou axial 316 du petit axe de manière à ce que le seul mouvement relatif possible des deux demi-axes soit une translation selon leur axe commun. Il comprend également un troisième disque 322, à proximité de sa première extrémité symétrique du deuxième disque 312, également pourvu de cannelures 323 prévues pour coopérer avec la section de centrage 205 de la protubérance comme décrit ci-dessus. Le troisième disque comprend également une gorge 325 prévue pour recevoir la deuxième extrémité du ressort 330.

Le grand axe 320 comprend également, à proximité de sa deuxième extrémité 327, un quatrième disque 326 prévu pour s'engager dans une ouverture cylindrique 123 de la deuxième saillie 121.

La deuxième saillie 121, qui apparaît de face à la figure 1, comprend un orifice circulaire 125 pourvu de quatre encoches 126, qui est disposé à son extrémité opposée à celle qui s'emboîte avec la protubérance 201 du deuxième élément 2. Cet orifice circulaire est prévu pour recevoir un bouchon 127 pourvu d'un corps cylindrique 128 qui s'introduit dans l'orifice circulaire 125 de la deuxième saillie 121. Le corps 128 du bouchon, qui apparaît en coupe dans la figure 4 et vu de face dans la figure 6, est muni de quatre ergots 129 prévus pour coopérer avec les encoches 126 de l'orifice circulaire 125 de manière à ce que, dans un premier temps le bouchon soit introduit en butée, ergots 129 face aux encoches 126, et dans un deuxième temps le bouchon soit pivoté sensiblement d'un huitième de tour pour que les ergots, figurant alors entre deux encoches, le maintiennent en place. Le bouchon 127 est percé en son centre de manière à recevoir la deuxième extrémité 327 du grand axe 320.

Une rondelle 130 est disposée entre une surface de frottement qui est la face du quatrième disque 326 du grand axe en regard du bouchon 127 et une surface d'appui qui est la face correspondante de ce bouchon. Elle est utilisée pour freiner une rotation relative de ces deux éléments et sera donc réalisée dans un matériau approprié à cet usage, du feutre, par exemple.

La première saillie 101 comprend des moyens exactement identiques à ceux décrits dans les deux paragraphes précédents relativement à la deuxième saillie 121. Elle est donc équipée d'un bouchon 105 et d'une rondelle 107 disposée entre le premier disque 311 du petit axe 310 et la face en regard de ce bouchon 105.

Le petit axe 310, le grand axe 320 et le ressort 330 sont dimensionnés de manière à pouvoir être introduits entre les deux bouchons 105, 127 et à ce que le ressort 330, lorsque l'ensemble est en position, exerce un effort de compression sur les deux rondelles 107, 130.

Dans l'exemple de réalisation adopté ici, la section de centrage 205 de la protubérance 201 est disposée à proximité de la première saillie 101. Une première fente 207 traverse cette protubérance pour déboucher dans son évidement cylindrique 204 entre la section de centrage 205 et l'extrémité jouxtant la deuxième saillie 121. Une deuxième fente 137, relie l'intérieur de la deuxième saillie 121 au corps du premier élément 1 entre l'extrémité de cette saillie jouxtant la protubérance 2 et le quatrième disque 326 du grand axe 320. Un circuit souple 4 dont une première extrémité est dans le corps du premier élément 1, traverse la deuxième fente 137, est enroulé en hélice dans un sens ou dans l'autre autour du grand axe 320 entre le troisième 322 et le quatrième 326 disque, traverse la première fente 207 et se termine par sa deuxième extrémité dans le corps du deuxième élément 2. Ce circuit souple assure ainsi la liaison électrique entre le premier 1 et le deuxième 2 éléments.

Le dispositif comprend de plus des moyens de verrouillage afin d'immobiliser le dispositif dans une position fermée où les deux éléments 1, 2 viennent en contact et dans une position ouverte où ces deux éléments font un certain angle, 180° par exemple. Les moyens, connus de l'homme de l'art, ne sont donc ni décrits ni représentés. Il peut s'agir de clips, par exemple.

L'invention permet de réaliser de manière avantageuse un téléphone portatif pliant. Dans sa position ouverte, il respecte ainsi la distance de séparation entre l'écouteur et le microphone situés chacun dans un élément, tandis que dans sa position fermée il présente un encombrement réduit.

Il a été mentionné que l'invention s'applique même en l'absence de l'axe 3. Elle s'applique également si cet axe est d'un seul tenant et non pas constitué de deux demi-axes.

De même, le ressort 330 dont la fonction essentielle est d'assurer une compression des rondelles 107, 130 et de compenser d'éventuelles tolérances de fabrication n'est pas indispensable à la réalisation de l'invention.

Par ailleurs, l'invention s'applique également si ces rondelles sont supprimées où si une seule d'entre elles est conservée.

Elle s'applique également si les moyens de centrage constitués par la section de centrage 205 et les cannelures des deuxième 312 et troisième 322 disques qui solidarisent en rotation l'axe 3 et le deuxième élément 2 sont absents ou s'ils sont d'une autre nature. L'homme de l'art connaît en effet de nombreux moyens équivalents.

Il sera précisé, de plus, que les bouchons 105, 107 ne sont pas des moyens obligatoires dans le cadre de la présente invention. Ils sont prévus pour des facilités d'assemblage et de démontage. Toutefois ils peuvent être supprimés ou remplacés par des moyens équivalents, notamment en les intégrant directement dans chaque saillie 101, 121.

En outre, la liaison électrique peut prendre une toute autre forme en restant dans les limites de l'invention. Le circuit souple 4 peut, par exemple effectuer un nombre de tours d'hélice quelconque entre les deux fentes 137, 207. Il peut également prendre la forme d'un ensemble de fils, d'un câble méplat ou autre. La liaison électrique doit être comprise dans un sens large, elle n'est pas nécessairement matérialisée par un seul ensemble. Ainsi, si la section de centrage 205 est disposée au centre de la protubérance 201, il est aisé de prévoir une troisième fente disposée entre cette section de centrage et la première saillie 101, symétrique de la première fente 207, et de prévoir une quatrième fente dans la première saillie 101, identique à la deuxième fente 130 de la deuxième saillie 121. Un deuxième circuit souple peut alors être disposé de la même manière que le premier.

## Revendications

1. Dispositif formé de deux éléments (1, 2) articulés autour d'une charnière et reliés par une liaison électrique, le premier (1) desdits éléments comprenant deux saillies (101, 121) dont l'une d'entre elles est pourvue d'une fente (137), le deuxième desdits éléments comprenant une protubérance (201) prévue pour s'engager entre lesdites saillies et pourvue d'une autre fente (207), ladite liaison électrique passant par lesdites fentes, caractérisé en ce que le premier (1) desdits éléments est formé de deux demi-coquilles (11, 12), les faces en regard desdites saillies sont pourvues d'une cavité cylindrique (102, 122), contenue pour moitié dans chacune desdites demi-coquilles, les extrémités de ladite protubérance sont également cylindriques, ladite protubérance étant prévue pour s'emboîter dans les cavités desdites saillies afin de former ladite charnière.

2. Dispositif selon la revendication 1, caractérisé en ce que ladite charnière comprend de plus dans chacune desdites saillies des moyens de guidage (103, 123), une section de centrage (205) disposée dans un évidement (204) reliant les deux extrémités de ladite protubérance (201) et un axe (3) coopérant avec lesdits moyens de guidage et ladite section de centrage, un espace vide au moins autour dudit axe s'étendant d'une fente (207) de ladite protubérance à une fente (137) d'une dite saillie.

3. Dispositif selon la revendication 1 ou 2, caractérisé en ce qu'il comprend de plus des moyens (206, 313, 323) pour immobiliser en rotation ledit axe (3) dans ladite protubérance (201).

4. Dispositif selon la revendication 3, caractérisé en ce que lesdits moyens d'immobilisation comprennent des éléments de centrage (206) disposés sur ladite section de centrage (205) qui coopèrent avec des cannelures (313, 323) de la section correspondante dudit axe (3).

5. Dispositif selon l'une quelconque des revendications 2 à 4, caractérisé en ce que ledit axe (3) est composé de deux demi-axes (310, 320) encastrés l'un dans l'autre, un ressort (330) étant disposé entre ces deux demi-axes afin de tendre à les éloigner.

6. Dispositif selon l'une quelconque des revendications 2 à 5 caractérisé en ce que, une dite saillie au moins présentant une surface d'appui qui fait face à une surface de frottement dudit axe (3), ces deux surfaces étant sensiblement perpendiculaires audit axe, une rondelle (107) est interposée entre ladite surface d'appui et ladite surface de frottement afin de freiner la rotation relative de ces deux surfaces.

7. Dispositif selon la revendication 6, caractérisé en ce que ladite rondelle (107) est en feutre.

8. Dispositif selon l'une quelconque des revendications 2 à 7 caractérisé en ce que, une dite saillie (121) au moins étant pourvue d'un orifice (125) sur son extrémité opposée à ladite cavité cylindrique, il comprend un bouchon (127) prévu pour être introduit dans ledit orifice et des moyens de fixation (126, 129) afin d'immobiliser ledit bouchon dans ladite saillie.

9. Dispositif selon l'une quelconque des revendications 1 à 8, caractérisé en ce que ladite liaison électrique est un circuit souple (4) au moins prévu pour être enroulé autour dudit axe (3).

10. Dispositif selon l'une quelconque des revendications 1 à 9, caractérisé en ce qu'il comprend des moyens de verrouillage afin de permettre l'immobilisation desdits deux éléments (1, 2) dans une position déterminée au moins.

11. Dispositif selon l'une quelconque des revendications 1 à 10, caractérisé en ce qu'il constitue un appareil téléphonique portatif pliant.

## Patentansprüche

1. Aus zwei um eine Drehachse gegeneinander schwenkbaren und über eine elektrische Verbindung verbundenen Elementen (1, 2) bestehenden Vorrichtung, wobei das erste Element (1) zwei Vorsprünge (101, 102) aufweist, von denen einer mit einem Schlitz (137) versehen ist, während das zweite Element eine Ausbauchung (201) enthält, die sich zwischen die Vorsprünge einfügt und mit einem weiteren Schlitz (207) versehen ist, wobei die elektrische Verbindung durch diese Schlitze verläuft, dadurch gekennzeichnet, daß das erste Element (1) aus zwei Halbschalen (11, 12) besteht, daß die einander gegenüberliegenden Flächen der Vorsprünge einen zylindrischen Hohlraum (102, 122) besitzen, der zur Hälfte in je einer der beiden Halbschalen liegt, daß die Enden der Ausbauchung ebenfalls zylindrisch sind und daß die Ausbauchung sich in die Hohlräume der Vorsprünge einfügen soll, um das Gelenk zu bilden.

2. Vorrichtung nach Anspruch 1, dadurch gekennzeichnet, daß das Gelenk außerdem in jedem der Vorsprünge Führungsmittel (103, 123) aufweist, daß ein Zentrierabschnitt (205) in einer Aussparung (204) die beiden Enden der Ausbauchung (201) verbindet und eine Achse (3) mit den Führungsmitteln und dem Zentrierabschnitt zusammenwirkt, wobei ein freier Raum zumindest um die Achse herum sich von einem Schlitz (207) der Ausbauchung bis zu einem Schlitz (137) eines Vorsprungs erstreckt.

3. Vorrichtung nach Anspruch 1 oder 2, dadurch gekennzeichnet, daß sie außerdem Mittel (206, 313, 323) enthält, um die Achse (3) in der Ausbauchung (201) in Drehrichtung festzulegen.

4. Vorrichtung nach Anspruch 3, dadurch gekennzeichnet, daß die Festlegungsmittel Zentrierelemente (206) aufweisen, die im Zentrierabschnitt (205) angeordnet sind und mit Rillen (313, 323) des entsprechenden Abschnitts der Achse (3) zusammenwirken.

5. Vorrichtung nach einem beliebigen der Ansprüche 2 bis 4, dadurch gekennzeichnet, daß die Achse (3) aus zwei Halbachsen (310, 320) besteht, die ineinandergesetzt sind, wobei eine Feder (330) zwischen diesen beiden Halbachsen angeordnet ist, um sie voneinander wegzudrücken.

6. Vorrichtung nach einem beliebigen der Ansprüche 2 bis 5, dadurch gekennzeichnet, daß mindestens ein Vorsprung eine Auflagefläche aufweist, die einer Reibungsfläche der Achse (3) gegenüberliegt, daß diese beiden Flächen im wesentlichen senkrecht zu dieser Achse liegen und daß eine Scheibe (107) zwischen die Auflagefläche und die Reibungsfläche gelegt ist, um die relative Drehung dieser beiden Flächen zu bremsen.

7. Vorrichtung nach Anspruch 6, dadurch gekennzeichnet, daß die Scheibe (107) aus Filz ist.

8. Vorrichtung nach einem beliebigen der Ansprüche 2 bis 7, dadurch gekennzeichnet, daß mindestens ein Vorsprung (121) mit einer Öffnung (125) an seinem dem zylindrischen Hohlraum entgegengesetzten Ende versehen ist und daß ein Stopfen (127) in diese Öffnung eingeführt ist und Befestigungsmittel (126, 129) den Stopfen im Vorsprung festlegen.

9. Vorrichtung nach einem beliebigen der Ansprüche 1 bis 8, dadurch gekennzeichnet, daß die elektrische Verbindung ein biegsames Kabel (4) ist, das zumindest um die Achse (3) gewikkelt werden kann.

10. Vorrichtung nach einem beliebigen der Ansprüche 1 bis 9, dadurch gekennzeichnet, daß sie Verriegelungsmittel aufweist, um die beiden Elemente (1, 2) in mindestens einer bestimmten Stellung zu arretieren.

11. Vorrichtung nach einem beliebigen der Ansprüche 1 bis 10, dadurch gekennzeichnet, daß sie einen faltbaren tragbaren Telefonapparat bildet.

## Claims

1. A device comprising two components (1, 2) that are hinged together and that are interconnected by an electrical connection, the first (1) of said components including two projections (101, 121), one of which is provided with a slot (137), the second of said components including a protuberance (201) designed to engage between said projections and provided with another slot (207), said electrical connection passing through said slots, the device being characterized in that the first (1) of said components comprises two half-shells (11, 12), with the facing faces of said projections being provided with respective cylindrical cavities (102, 122), each having one-half contained in a respective one of said half-shells, the ends of said protuberance also being cylindrical, said protuberance being designed to engage in the cavities of said projections in order to form said hinge.

2. A device according to claim 1, characterized in that said hinge further includes guide means (103, 123) in each of said projections, a centering section (205) disposed in a hollow (204) interconnecting the two ends of said protuberance (201), and a shaft (3) co-operating with said guide means and said centering section, at least one empty space around said shaft extending from a slot (207) in said protuberance to a slot (137) in one of said projections.

3. A device according to claim 1 or 2, characterized in that it further includes locking means (206, 313, 323) for preventing said shaft (3) rotating inside said protuberance (201).

4. A device according to claim 3, characterized in that said locking means comprise centering pieces (206) disposed on said centering section (205) and co-operating with fluting (313, 323) of corresponding section on said shaft (3).

5. A device according to any one of claims 2 to 4, characterized in that said shaft (3) is made up of two half-shafts (310, 320), one engaged in the other, a spring (330) being disposed between said two half-shafts to urge them apart.

6. A device according to any one of claims 2 to 5, characterized in that at least one of said projections has a bearing surface facing a friction surface of said shaft (3), these two surfaces being substantially perpendicular to said shaft, a washer (107) being interposed between said bearing surface and said friction surface in order to brake relative rotation between these two surfaces.

7. A device according to claim 6, characterized in that said washer (107) is made of felt.

8. A device according to any one of claims 2 to 7, characterized in that since at least one of said projections (121) is provided with an orifice (125) at its end opposite to said cylindrical cavity, it includes a plug (127) designed to be inserted in said orifice, together with fixing means (126, 129) for locking said plug in said projection.

9. A device according to any one of claims 1 to 8, characterized in that said electrical connection is at least one flexible circuit (4) designed to be wound around said shaft (3).

10. A device according to any one of claims 1 to 9, characterized in that it includes locking means for locking said two components (1, 2) in at least one determined position.

11. A device according to any one of claims 1 to 10, characterized in that it is constituted by a folding portable telephone appliance.
